# EUROPÄISCHE PATENTSCHRIFT

(11) **EP 2 467 220 B1**
(45) Veröffentlichungstag und Bekanntmachung des Hinweises auf die Patenterteilung: **10.10.2012**
(21) Anmeldenummer: 10754418.1
(22) Anmeldetag: 28.08.2010
(51) Int. Cl.: B21D 39/20, B21D 41/02, B29C 57/04, F16L 13/14

(54) **VORRICHTUNG ZUM AUFWEITEN VON HOHLKÖRPERN**
DEVICE FOR EXPANDING HOLLOW BODIES
DISPOSITIF POUR ÉLARGIR DES CORPS CREUX

(30) Priorität: 23.09.2009 DE 102009042719; 13.01.2010 DE 102010004426
(43) Veröffentlichungstag der Anmeldung: 27.06.2012
(73) Patentinhaber: Rothenberger Aktiengesellschaft, 65779 Kelkheim (DE)
(72) Erfinder: LINDNER, Knut, 65779 Kelkheim (DE); KRAUSE, Thoralf, 04357 Leipzig (DE); GREDING, Arnd, 65719 Hofheim (DE)
(74) Vertreter: Mill, Andreas
(86) Internationale Anmeldenummer: PCT/EP2010/005299
(87) Internationale Veröffentlichungsnummer: WO 2011/035840

(56) Entgegenhaltungen:
- EP-A2- 2 090 384
- EP-B1- 0 725 908
- DD-A1- 221 936
- DE-C1- 4 339 993

## Beschreibung

Die Erfindung betrifft eine Vorrichtung zum Aufweiten von Hohlkörpern, insbesondere von Rohrenden, mit mehreren sektorförmigen Spreizbacken, die in einer Halterung um eine Achse "A-A" verteilt angeordnet und radial dazu bewegbar sind und Ausschnitte aus Zylinderflächen aufweisen, deren Radien den Radien des aufgeweiteten Hohlkörpers entsprechen, wobei in den Trennfugen zwischen den Spreizbacken alternierend Vorsprünge und Ausnehmungen angeordnet sind, und wobei die Aussenflächen der Vorsprünge gegenüber den Zylinderflächen zumindest an ihren Ende radial einwärts verlaufen.

Solche Vorrichtungen werden auch als "Expander" bzw. Expanderköpfe bezeichnet und dienen u.a. als Werkzeuge für den Einsatz in der Sanitärtechnik. Der Antrieb kann manuell, z.B. durch Handhebel, aber auch motorisch durch Gewindespindeln oder durch hydraulische Maschinen erfolgen.

Durch die EP 0 725 908 B1 und die ihr entsprechende DE 694 14 721 T2 ist es bekannt, dass beim Aufweiten von Kunststoffrohren zur Herstellung von Rohrverbindungen zusätzlich andere Zusammenhänge zu beachten sind als beim Aufweiten von Metallrohren. Kunststoffrohre, insbesondere solche aus vernetzten Polyolefinen einschliesslich des vernetzten Polyäthylens haben ein sogenanntes Formgedächtnis, das auch als Memory-Effekt bezeichnet wird. Das führt dazu, dass sich die Rohre nach dem Aufweiten zeitabhängig wieder zusammenziehen, so dass entsprechende Arbeitsgeschwindigkeiten anzuwenden sind. Weiterhin haben Kunststoffrohre gegenüber Metallrohren gleichen Durchmessers deutlich grössere Wandstärken, so dass die radiale Aufweitung mindestens diesen Wandstärken entsprechen muss.

Auf der Grundlage dieser überlegungen und vor dem Hintergrund, scharfkantige Einprägungen durch die Kanten von Spreizbacken zu unterdrücken, die zu Undichtigkeiten der späteren Rohrverbindung führen, schlagen die genannten Dokumente vor, die Aufweitung in mehreren Stufen vorzunehmen, und die Spreizbacken nach jeder Stufe wieder in die Ausgangslage zurückzuführen und sie danach tiefer in das Rohrende einzuschieben und die Expansion mehrfach zu wiederholen bzw. fortzusetzen. Dabei sollen die Stufen radial deutlich kleiner sein als die Wandstärke der Rohre. Die Radialbewegung erfolgt durch einen Spreizdorn mit einer schlanken Kegelfläche, die in einen Satz von beispielsweise sechs Spreizbacken eingeschoben wird. Diese Spreizbacken haben jeweils zwei äussere Zylinderflächen, zwischen denen in axialer Richtung je eine Kegelfläche angeordnet ist, wobei diese Flächengeometrien der expandierten Backenstellung entsprechen. Die Kegelflächen können dabei auf ihren Aussenseiten auch mit feinen Verzahnungen versehen sein.

Einerseits ist es dadurch möglich, die Umfangsflächen der Backensektoren zu Lasten der Spaltbreiten zwischen den Backen grösser zu wählen, andererseits aber bedingt diese Bauweise für jede Rohrverbindung mehrfache Werkzeugbetätigungen, die - auch wegen des Losrüttelns - zeitraubend und wegen des Kraftbedarfs ermüdend auf die Bedienungsperson einwirken, und zwar auch wegen des Gewichts des Werkzeugs. Weiterhin behält das aufgeweitete Rohrende auch beim Aufschieben über die letzte Zylinderfläche seine Trichterform bei, wodurch die Führungseigenschaften des Rohrendes teilweise verloren gehen.

Durch die DD 221 936 A1 und die DE 43 39 993 C1, die z.B. dem Oberbegriff des Anspruchs 1 entspricht, ist es bei Werkzeugen mit einstufiger Expansion bekannt, in den Trennfugen zwischen den Spreizbacken in Achsrichtung alternierende Vor- und Rücksprünge anzuordnen, um das Einsinken der Wandung der Hohlkörper mit zunehmender Radialbewegung der Spreizbacken zu mildern. Dabei spielt die überlegung eine Rolle, das die Aussenflächen der Spreizbacken, die sogenannten Arbeitsflächen, in der radialen Endstellung in einer Zylinderfläche liegen sollen. Es hat sich jedoch gezeigt, dass die Wirkung von unerwünschten Verformungen begleitet ist. In der DE 43 39 993 C1 wird daher vorgeschlagen, die Enden der Vorsprünge gegenüber den teilzylindrischen Arbeitsflächen derart nach innen abzuschrägen, dass die Aussenflächen der Vorsprünge in zusammengezogenem Zustand der Spreizbacken zumindest nicht wesentlich über die von den Arbeitsflächen definierten Zylinder-Teilflächen hinaus ragen.

Es hat sich jedoch gezeigt, dass die zwischen den Zylinderflächen und den Abschrägungen entstandenen Kanten zu Beginn der Expansion kantige Einprägungen hinterlassen, die im Verlaufe der weiteren Expansion nicht mehr vollständig zum Verschwinden gebracht werden können. Als Ursache hierfür kann angenommen werden, dass durch die Kanten ein Biegen und damit ein verstärktes Fliessen des Werkstoffs verursacht wird, durch das die Festigkeit des Werkstoffs lokal übermässig erhöht wird und bei Fortsetzung der Expansion nicht mehr ausgeglichen werden kann. Dieser Effekt wird in der Metallurgie als Kaltverfestigung bezeichnet (siehe der "Grosse Brockhaus", 1983, S. 138), Die Folge sind Undichtigkeiten an den Verbindungsstellen von Rohrenden, die zu Leckagen führen.

Durch die EP 0 718 057 A2 ist es bekannt, die achsparallen Längskanten und auch die kreissektorförmigen Stirnkanten von Spreizbacken zu brechen bzw. abzrunden, und zwar mit einem maximalen Radius von 2,0 mm. Es hat sich jedoch in der Praxis gezeigt, dass solche Abrundungen an den Stirnkanten nicht ausreichen, um Sprödbrüche von Kunststoffrohren bei mechanischen Beanspruchungen zu vermeiden, sei es bei der Aufweitung, beim Zusammenfügen von Leitungsabschnitten, durch Rohrverformungen bei der Montage oder bei hohen Innendrücken wie bei Wasserleitungen für Trinkwasser und Heizung.

Vor diesem Hintergrund liegt der Erfindung die Aufgabe zugrunde, eine Expansionsvorrichtung und ein Betriebsverfahren für Kunststoffrohre anzugeben, durch die es möglich ist, einstufig druckfeste Aufweitungen mit grossen radialen Wegen über die gesamte Verbindungslänge zweier Rohrenden in einem Arbeitsgang mit gleichbleibendem Querschnitt herzustellen und dennoch die Ausbildung scharfkantiger Einprägungen in den expandierten Rohrenden zu unterdrücken und damit die Ursachen für Undichtigkeiten.

Die Lösung der gestellten Aufgabe erfolgt bei der eingangs angegebenen Vorrichtung erfindungsgemäss dadurch, dass
a) die Zylinderflächen abgerundet in die Aussenflächen der Vorsprünge übergehen,
b) die Spreizbacken im Bereich ihrer freien Enden radial einwärts verjüngt ausgebildet sind und dass
c) die Ausnehmungen und die Vorsprünge in dem radial einwärts verjüngten Bereich fortgesetzt sind.

Dadurch wird die gestellte Aufgabe in vollem Umfangt gelöst, nämlich eine Expansionsvorrichtung und ein Betriebsverfahren für Kunststoffrohre angegeben, durch die es möglich ist, einstufig druckfeste Aufweitungen mit grossen radialen Wegen über die gesamte Verbindungslänge zweier Rohrenden in einem Arbeitsgang mit in axialer Richtung gleichbleibendem Querschnitt herzustellen und dennoch die Ausbildung scharfkantiger Einprägungen in den expandierten Rohrenden zu unterdrücken und damit die Ursachen für Undichtigkeiten. Dabei spielt es insbesondere eine Rolle, dass die Spreizbacken im Bereich ihrer freien Enden radial einwärts verjüngt ausgebildet sind und dass die Ausnehmungen und die Vorsprünge in dem radial einwärts verjüngten Bereich fortgesetzt sind. Dadurch wird nämlich erreicht, dass die plastische Verformung des Rohres im übergangsbereich zwischen dem ursprünglichen Rohrdurchmesser und dem expandierten Rohrdurchmesser über eine längere Strecke verteilt auftritt, so dass punktförmig auftretende dreiaxiale Verformungen mit starken Versprödungseffekten unterdrückt werden.

Es ist im Zuge weiterer Ausgestaltungen der Erfindung besonders vorteilhaft, wenn
* der radial einwärts verjüngte Bereich auf dem Umfang einerseits kantenfrei in die Zylinderflächen übergeht und andererseits auch gegenüber den Stirnflächen abgerundet ausgebildet ist,
* die Aussenflächen des einwärts verjüngten Bereichs am Ende des Spreizhubes in einer kegelförmigen Hüllfläche liegen,
* der öffnungswinkel der kegelförmigen Hüllfläche zwischen 30 und 45 Grad beträgt,
* die Länge des einwärts verjüngten Bereichs zwischen 3 und 30 mm beträgt, und/oder, wenn
* der Krümmungsradius an den übergangsstellen zwischen den Zylinderflächen und den Aussenflächen der Vorsprünge mindestens 1 mm beträgt.

Ein Ausführungsbeispiel des Erfindungsgegenstandes und dessen Wirkungsweisen und weitere Vorteile werden nachfolgend anhand der Figuren 1 bis 3 näher erläutert.

Es zeigen:
- Figur 1: eine perspektivische Darstellung von fünf Spreizbacken eines Expansionskopfes in gespreiztem Zustand,
- Figur 2: eine axiale Draufsicht auf sechs Spreizbacken in zusammengezogenem Zustand und ,
- Figur 3: eine axiale Draufsicht auf den Gegenstand von Figur 2 mit den sechs Spreizbacken in der vorbestimmten Endstellung am Ende eines Aufweitevorgangs eines Rohres.

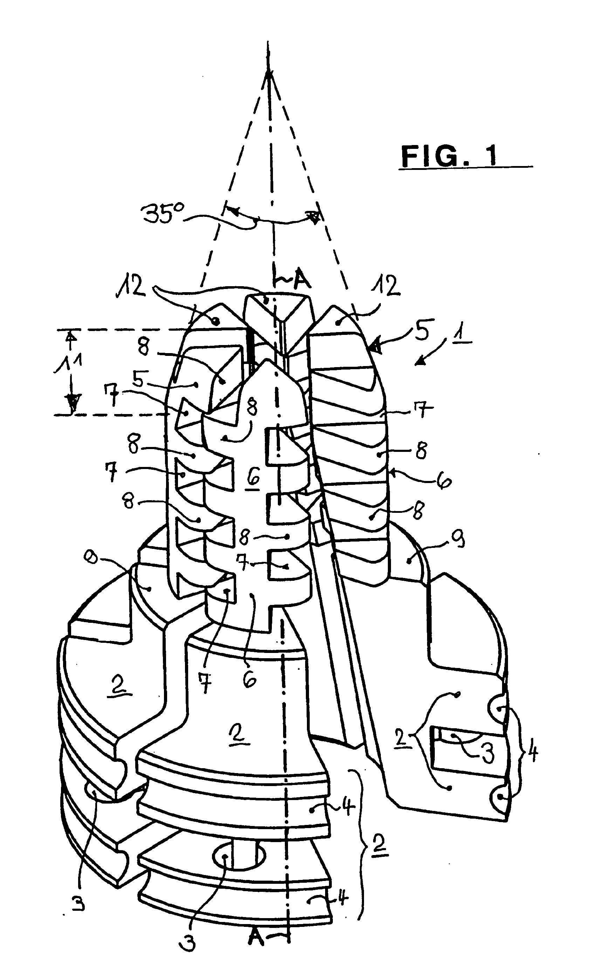

In Figur 1 wurde der besseren übersichtlichkeit halber die überwurfmutter für die Befestigung auf einem Antriebswerkzeug weggelassen, desgleichen eine der Spreizbacken 1, die in üblicher Weise mittels Führungsstiften in der überwurfmutter gelagert sind, die radiale Langlöcher besitzt, in denen die Führungsstifte verschiebbar sind. Hierfür besitzen die Flanschsektoren 2 achsparallele Bohrungen 3. In Abschnitte von Umfangsnuten 4 werden hier gleichfalls nicht gezeigte Zugfedern eingelegt. Weggelassen wurde weiterhin der zum Antrieb gehörende Spreizdorn, der eine zu einer Achse "A-A" koaxiale Kegel- oder Pyramidenfläche aufweisen kann, je nach der Geometrie der hierzu komplementären Gleitflächen an die Innenseiten der Spreizbacken 1.

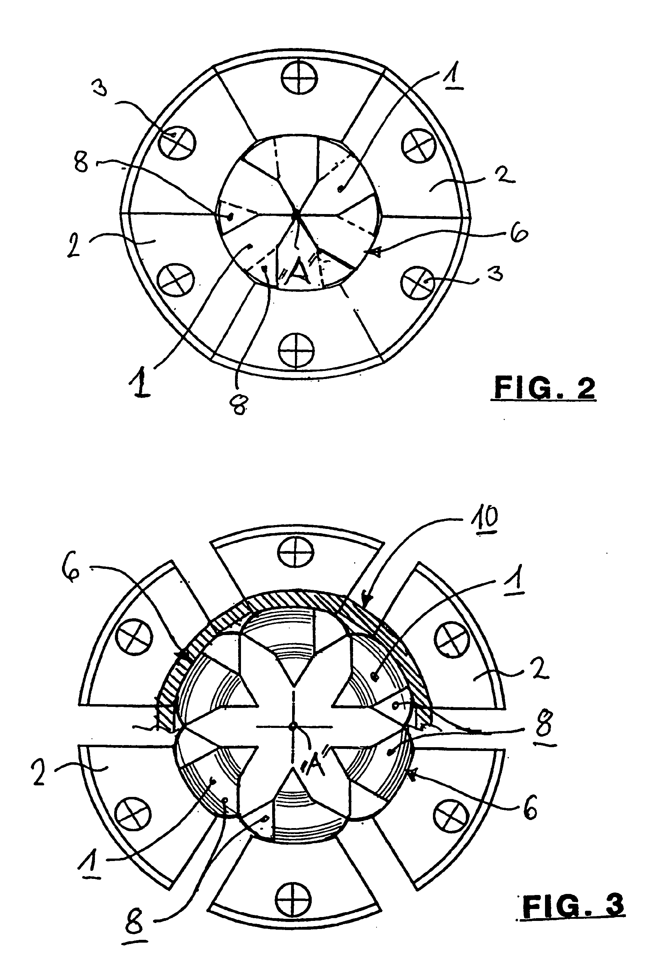

Von jedem Flanschsektor 2 erstreckt sich parallel zu der Achse "A-A" ein Fortsatz 5 mit einem Ausschnitt aus einer Zylinderfläche 6, deren Radius dem vorgegebenen Innenradius des aufgeweiteten Hohlkörpers 10 entspricht. Diese Stellung ist in Figur 3 gezeigt. In die Zylinderflächen 6 ragen von beiden Seiten her Ausnehmungen 7 hinein, die sich in Richtung der Achse "A-A" mit Vorsprüngen 8 abwechseln. Wie speziell die Figur 1 zeigt, sind die Ausnehmungen 7 und die Vorsprünge 8 auf beiden Seiten der Spreizbacken 1 bzw. der Zylinderflächen 6 relativ zueinander versetzt angeordnet und so dimensioniert, dass alle Spreizbacken 1 identisch geformt sind und ineinandergreifen, so dass für jede Grösse jeweils nur ein Typ von Spreizbacken 1 benötigt wird. Zwischen den Zylinderflächen 6 und den Flanschsektoren 2 befinden sich noch Anschlagflächen 9 für die Endflächen der aufzuweitenden Hohlkörper 10.

An dieser Stelle setzt nun die Erfindung ein: Wie die Figuren 1 bis 3 zeigen, erstrecken sich die Zylinderflächen 6 noch über eine Teillänge der Vorsprünge 8 mit gleichem Radius. Dann erfolgt jedoch eine Verringerung des Krümmungsradius, so dass die Enden der Vorsprünge 8 radial weiter innen liegen als die Zylinderflächen 6. Wie die Figuren 2 und 3 zeigen, entstehen dadurch weder in geschlossenem Zustand der Spreizbacken 1 (Figur 2), noch in dem am weitesten geöffneten Zustand (Figur 3) vorstehende Kanten, die bleibende Einprägungen und scharfkantige und verfestigte Biegungen durch starkes Fliessen des Werkstoffs in dem Material der Hohlkörper 10 hinterlassen könnten. Dieses Material wird dann im wesentlichen nur noch auf tangentiales Fliessen beansprucht.

Die Figur 1 zeigt weiterhin, dass die Spreizbacken 1 an ihren freien Ende in einem Bereich 11 radial einwärts verjüngt ausgebildet sind und dass sich die Ausnehmungen 7 und die Vorsprünge 8 in dem Bereich 11 fortsetzen. In expandiertem Zustand liegen die Aussenflächen des Bereichs 11 in einer kegelförmigen Hüllfläche, mit einem öffnungswinkel von beispielhaft 35 Grad, was durch die beiden gstrichelten Linien angedeutet ist, die sich auf der Achse A-A schneiden. Dadurch werden sektorförmigen Stirnflächen 12 mit kleinerem Aussenumfang abgegrenzt als der Aussenumfang der Zylinderflächen 6. Die übergänge des Bereichs 11 in die Zylinderflächen 6 einerseits und in die Stirnflächen 12 andererseits sind gut abgerundet, um auch hier Kantenpressungen zu vermeiden. Die Abrundungen sind in Figur 3 durch Scharen von dünnen konzentrischen Kreisen mit Mittelpunkten auf der Achse A-A angedeutet.

Die Figur 2 lässt sehr deutlich erkennen, dass auf der Aussenseite der zick-zack-förmigen Trennfugen und auf den Aussenseiten der Vorsprünge 8 nur gut abgerundete Flächen vorliegen, und die Figur 3 macht gleichfalls deutlich, dass diese Geometrie auch in maximal gespreiztem Zustand der Spreizbacken 1 erhalten bleibt und dass der kerbenförmige Nutengrund geradlinig von dem gestreckten Material des Hohlköpers 10 überspannt wird, was in der oberen Hälfte von Figur 3 gezeigt ist. Der Innenquerschnitt des Hohlkörpers 10 weicht also nur kleinstmöglich von einer Zylinderfläche ab, was die Dichtheit einer nachfolgenden Rohrverbindung wesentlich verbessert.

Die Herstellung der einzelnen Spreizbacken 1 kann in vorteilhafter Weise durch Sintern geeigneter Metallpartikel in einer komplementären und beheizten Form erfolgen.

### Bezugszeichenliste:

- 1: Spreizbacken
- 2: Flanschsektoren
- 3: Bohrungen
- 4: Umfangsnut
- 5: Fortsatz
- 6: Zylinderfläche
- 7: Ausnehmungen
- 8: Vorsprünge
- 9: Anschlagflächen
- 10: Hohlkörper
- 11: verjüngter Bereich
- 12: Stirnflächen

- "A-A": Achse

## Patentansprüche

1. Vorrichtung zum Aufweiten von Hohlkörpern (10), insbesondere von Rohrenden, mit mehreren sektorförmigen Spreizbacken (1), die in einer Halterung um eine Achse "A-A" verteilt angeordnet und radial dazu bewegbar sind und Ausschnitte aus Zylinderflächen (6) aufweisen, deren Radien den Radien des aufgeweiteten Hohlkörpers (10) entsprechen, wobei in den Trennfugen zwischen den Spreizbacken (1) alternierend Vorsprünge (8) und Ausnehmungen (7) angeordnet sind, und wobei die Aussenflächen der Vorsprünge (8) gegenüber den Zylinderflächen (6) zumindest an ihren Enden radial einwärts verlaufen, **dadurch gekennzeichnet, dass**
a) die Zylinderflächen (6) abgerundet in die Aussenflächen der Vorsprünge (8) übergehen,
b) die Spreizbacken (1) im Bereich ihrer freien Enden radial einwärts verjüngt ausgebildet sind und dass
c) die Ausnehmungen (7) und die Vorsprünge (8) in dem radial einwärts verjüngten Bereich (11) fortgesetzt sind.

2. Vorrichtung nach Anspruch 1, **dadurch gekennzeichnet, dass** der radial einwärts verjüngte Bereich (11) auf dem Umfang einerseits kantenfrei in die Zylinderflächen (6) übergeht und andererseits auch gegenüber den Stirnflächen (12) abgerundet ausgebildet ist.

3. Vorrichtung nach Anspruch 1, **dadurch gekennzeichnet, dass** die Aussenflächen des einwärts verjüngten Bereichs (11) am Ende des Spreizhubes in einer kegelförmigen Hüllfläche liegen.

4. Vorrichtung nach Anspruch 3, **dadurch gekennzeichnet, dass** der öffnungswinkel der kegelförmigen Hüllfläche zwischen 30 und 45 Grad beträgt.

5. Vorrichtung nach Anspruch 4, **dadurch gekennzeichnet, dass** die Länge des einwärts verjüngten Bereichs (11) zwischen 3 und 30 mm beträgt.

6. Vorrichtung nach Anspruch 1, **dadurch gekennzeichnet**, das der Krümmungsradius an den übergangsstellen zwischen den Zylinderflächen (6) und den Aussenflächen der Vorsprünge (8) mindestens 1 mm beträgt.

7. Verwendung der Vorrichtung nach Anspruch 1 zum Aufweiten von Hohlkörpern (10) aus Kunststoffrohren mit Formgedächtnis.

## Claims

1. A device for flaring hollow bodies (10), particularly pipe ends, having a plurality of sector-shaped spreading jaws (1) disposed distributed about an axis "A-A" in a mounting element and radially displaceable thereto and comprising segments of cylindrical surfaces (6), the radii thereof corresponding to the radii of the flared hollow body (10), protrusions (8) and recesses (7) being disposed alternately in the interstices between the spreading jaws (1), and the outer surfaces of the protrusions (8) extending radially inward relative to the cylinder surfaces (6) at least at the ends thereof, **characterized in that**
a) the cylinder surfaces (6) are rounded off for transitioning to the outer surfaces of the protrusions
b) the spreading jaws (1) are tapered radially inwards in the area of the free ends thereof, and that
c) the recesses (7) and the protrusions (8) are continued in the area (11) tapering radially inward.

2. The device according to claim 1, **characterized in that** the radially inwardly tapering area (11) transitions edgelessly into the cylinder surfaces (6) at the circumference on one side, and is also rounded off relative to the end faces (12) on the other.

3. The device according to claim 1, **characterized in that** the outer surfaces of the inwardly tapering area (11) are in a cone-shaped surface at the end of the spreader stroke.

4. The device according to claim 3, **characterized in that** the apex angle of the cone-shaped surface is between 30 and 45 degrees.

5. The device according to claim 4, **characterized in that** the length of the inwardly tapered area (11) is between 3 and 30 mm.

6. The device according to claim 1, **characterized in that** the radius of curvature at the transition points between the cylinder surfaces (6) and the outer surfaces of the protrusions (8) is at least 1 mm.

7. Use of the device according to claim 1 for flaring hollow bodies (10) made of plastic pipe having shape memory.

## Revendications

1. Dispositif pour évaser des corps creux (10), en particulier des extrémités de tube, avec plusieurs mâchoires écartables (1) conformées en secteurs, agencées dans un support, distribuées autour d'un axe « A-A », mobiles radialement par rapport à celui-ci, et comportant des découpes dans des surfaces cylindriques (6) dont les rayons correspondent aux rayons du corps creux évasé (10), dans lequel des projections (8) et des évidements (7) en alternance sont agencés aux jonctions de séparation entre les mâchoires écartables (1), et dans lequel les surfaces externes des projections (8) sont orientées radialement vers l'intérieur par rapport aux surfaces cylindriques (6) au moins à leurs extrémités, **caractérisé en ce que**
a) les surfaces cylindriques (6) sont arrondies là où elles rejoignent les surfaces externes des projections (8),
b) les mâchoires écartables (1) sont constituées avec une section qui décroît radialement vers l'intérieur dans la zone de leurs extrémités libres, et **en ce que**
c) les évidements (7) et projections (8) se prolongent dans la zone à section qui décroît radialement vers l'intérieur (11).

2. Dispositif selon la revendication 1, **caractérisé en ce que**, sur la circonférence, la zone à section qui décroît radialement vers l' intérieur (11) rejoint d'une part sans bord les surfaces cylindriques (6) et est d'autre part aussi arrondie par rapport aux surfaces frontales (12).

3. Dispositif selon la revendication 1, **caractérisé en ce que** les surfaces externes de la zone à section qui décroît vers l'intérieur (11) sont disposées en fin de course d'écartement sous forme d'une surface à enveloppe conique

4. Dispositif selon la revendication 3, **caractérisé en ce que** l'angle d'ouverture de la surface à enveloppe conique est compris entre 30 et 45 degrés.

5. Dispositif selon la revendication 4, **caractérisé en ce que** la longueur de la zone à section qui décroît vers l' intérieur (11) est comprise entre 3 et 30 millimètres.

6. Dispositif selon la revendication 1, **caractérisé en ce que** le rayon de courbure aux jonctions entre les surfaces cylindriques (6) et les surfaces externes des projections (8) est supérieur ou égal à 1 millimètre.

7. Utilisation du dispositif selon la revendication 1 pour évaser des corps creux (10) constitués de tubes en matière plastique à mémoire de forme.
